# EUROPÄISCHE PATENTANMELDUNG

(11) **EP 1 475 262 A1**
(43) Veröffentlichungstag der Anmeldung: **10.11.2004**
(21) Anmeldenummer: 04010443.2
(22) Anmeldetag: 03.05.2004
(51) Int. Cl.: B60J 5/10

(54) **Fahrzeug mit einer Heckklappe, in der eine Heckscheibe höhenverstellbar aufgenommen ist**

(30) Priorität: 05.05.2003 DE 10320107
(71) Anmelder: Webasto AG, 82131 Stockdorf (DE)
(72) Erfinder: De Gaillard, Francois, 75016 Paris (FR)
(74) Vertreter: Bedenbecker, Markus

(57) **Zusammenfassung**

Die Erfindung betrifft ein Fahrzeug mit einer Heckklappe (17), in der eine Heckscheibe (12) höhenverstellbar aufgenommen ist, und bei dem die Heckklappe (17) unterhalb des Fahrzeugdaches (10) beabstandet von diesem nach oben verschwenkbar an den seitlichen Karosseriewänden (18, 19) angelenkt ist.

## Beschreibung

Die Erfindung betrifft ein Fahrzeug gemäß dem Oberbegriff des Anspruchs 1.

Derartige Fahrzeuge werden immer beliebter, da bei ihnen einen Zugang zum Kofferraum nicht nur durch Öffnen der Heckklappe, sondern auch durch Absenken der Heckscheibe möglich ist.

Aus der EP 0 803 390 A1 ist ein eingangs genanntes Fahrzeug bekannt geworden, bei dem die Heckklappe mit der höhenverstellbar in ihr aufgenommenen Heckscheibe in der Nähe des Stoßfängers am Fahrzeugheck angelenkt und nach unten aufschwenkbar ist.

Die EP 0 163 232 B1 offenbart ebenfalls ein eingangs genanntes Fahrzeug, bei dem die Heckklappe mit der höhenverstellbar in ihr aufgenommenen Heckscheibe zwei als Fensterrahmen für die Heckscheibe dienende seitliche Arme aufweist, deren oberes Ende am Fahrzeugdach angelenkt ist. Diese Heckklappe ist nach oben aufschwenkbar.

Bei beiden vorgenannten Fahrzeugen ist jedoch die Kinematik des Öffnungsvorgangs der Heckklappe unbefriedigend gelöst.

Der Erfindung liegt die Aufgabe zugrunde, ein eingangs genanntes Fahrzeug zu schaffen, bei dem die vorgenannten Probleme des Standes der Technik überwunden sind.

Die Aufgabe wird erfindungsgemäß dadurch gelöst, dass bei dem eingangs genannten Fahrzeug die Heckklappe des Fahrzeugdaches, beabstandet von diesem, nach oben verschwenkbar an den seitlichen Karosseriewänden angelenkt ist. Dadurch wird die Kinematik der Heckklappe bei deren Öffnung stark verbessert. Außerdem kann eine derartige Heckklappe sowohl bei "normalen" Kombifahrzeugen mit festem Dach als auch bei so genannten Semicabriolet-Fahrzeugen, bei denen zumindest der hintere Dachbereich entfernbar ist, eingesetzt werden. Dies senkt die Herstellungskosten der Heckklappe aufgrund der durch die vielfältigen Einsatzmöglichkeiten erzielbaren höheren Stückzahlen.

Vorteilhafte Ausgestaltungen der Erfindung sind in den Unteransprüchen angegeben.

Der Platzbedarf beim Öffnen der Heckklappe in horizontaler und/oder in vertikaler Richtung kann optimiert bzw. minimiert werden, wenn die Heckklappe mittels einer Mehrgelenk-Anordnung und insbesondere einer 4-Gelenk-Anordnung oder einer 7-Gelenk-Anordnung am Fahrzeugheck angelenkt ist.

Es ist vorteilhaft, eine Verriegelungsvorrichtung vorzusehen, die die Heckklappe in ihrer Öffnungsstellung sichert. Zusätzlich kann es zweckmäßig sein, wenn die Heckklappe auch in zumindest einer Teilöffnungsstellung festlegbar ist.

Die Führung der Heckscheibe in der Heckklappe lässt sich besonders formschön darstellen, wenn die Heckscheibe rahmenlos in der Heckklappe geführt ist. Dabei ist es vorteilhaft, wenn in der Heckklappe zur Führung der Heckscheibe untere Führungsschienen vorgesehen sind. Die Führung kann noch weiter verbessert werden, wenn auch in den seitlichen Karosseriewänden obere Führungsschienen vorgesehen sind, die mit den unteren Führungsschienen fluchten.

Wenn die oberen Führungsschienen in seitlich der Heckscheibe angeordnete Rücklichtanordnungen integriert sind, ergibt sich ein kleiner Platzbedarf für diese oberen Führungsschienen. Darüber hinaus lässt sich hiermit ein guter Design-Effekt erzielen.

Der Trend zur Verwendung von Semicabriolet-Fahrzeugen kann berücksichtigt werden, indem zumindest ein hinterer Dachbereich des Fahrzeugdaches entfernt werden und dadurch aus einem Kombifahrzeug ein solches Semicabriolet-Fahrzeug gebildet werden kann.

Der Bedienkomfort und die Bedienungssicherheit eines erfindungsgemäßen Fahrzeugs können gemäß einer vorteilhaften Weiterbildung der Erfindung erhöht werden, indem eine automatisch arbeitende Absenkvorrichtung zum Absenken der Heckscheibe in die Heckklappe bei deren Öffnung vorgesehen ist. Die Absenkvorrichtung garantiert, dass die Heckklappe nur dann geöffnet werden kann, wenn die Heckscheibe bereits in sie abgesenkt ist oder dieser Absenkvorgang bereits eingeleitet worden ist. Dies ist besonders dann wichtig, wenn der in der Vertikalen zur Verfügung stehende Platz sehr begrenzt ist.

Nachfolgend wird ein erfindungsgemäßes Fahrzeug mit einer Heckklappe anhand von Ausführungsbeispielen unter Bezugnahme auf die Zeichnung näher erläutert.

Es zeigen:
- Fig. 1: eine perspektivische Darstellung einer Ausführungsform des erfindungsgemäßen Personenkraftwagens mit einer etwa halb hochgeschwenkten Heckklappe und mit in die Heckklappe abgesenkter Heckscheibe;
- Fig. 2: eine der Fig. 1 ähnliche Ansicht, wobei die Heckklappe geschlossen und die Heckscheibe fast vollständig in die Heckklappe abgesenkt ist;
- Fig. 3: eine der Fig. 2 ähnliche Ansicht eines Personenkraftwagens mit Lamellendach mit geschlossener Heckklappe und vollständig hochgefahrener Heckscheibe;
- Fig. 4: eine der Fig. 3 ähnliche Ansicht mit vollständig abgesenkter Heckscheibe;
- Fig. 5.: eine der Fig. 4 ähnliche Ansicht eines Personenkraftwagens mit entferntem Dach und geschlossener Heckklappe sowie abgesenkter Heckscheibe;
- Fig. 6: den in Fig. 5 dargestellten Personenkraftwagen mit vollständig hochgeschwenkter Heckklappe und vollständig abgesenkter Heckscheibe;
- Fig. 7: eine vergrößerte perspektivische Darstellung eines Heckbereichs eines Personenkraftwagens mit einer hochgeschwenkten Heckklappe mit den zugehörigen Lenkern einer 4-Gelenk-Anordnung zur Anlenkung der Heckklappe an dem Personenkraftwagen;
- Fig. 8: eine Seitenansicht eines Personenkraftwagens mit hochgeschwenkter Heckklappe und einer Verriegelungsvorrichtung zur Sicherung der Heckklappe in dieser Öffnungsstellung; und
- Fig. 9: eine Heckansicht einer weiteren Ausführungsform des erfindungsgemäßen Personenkraftwagens.

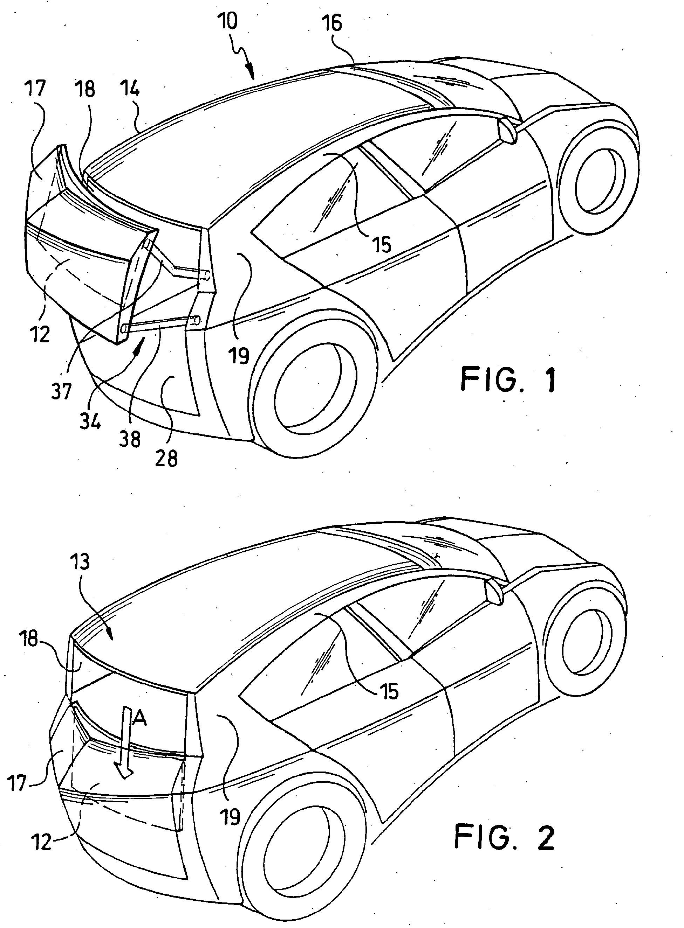

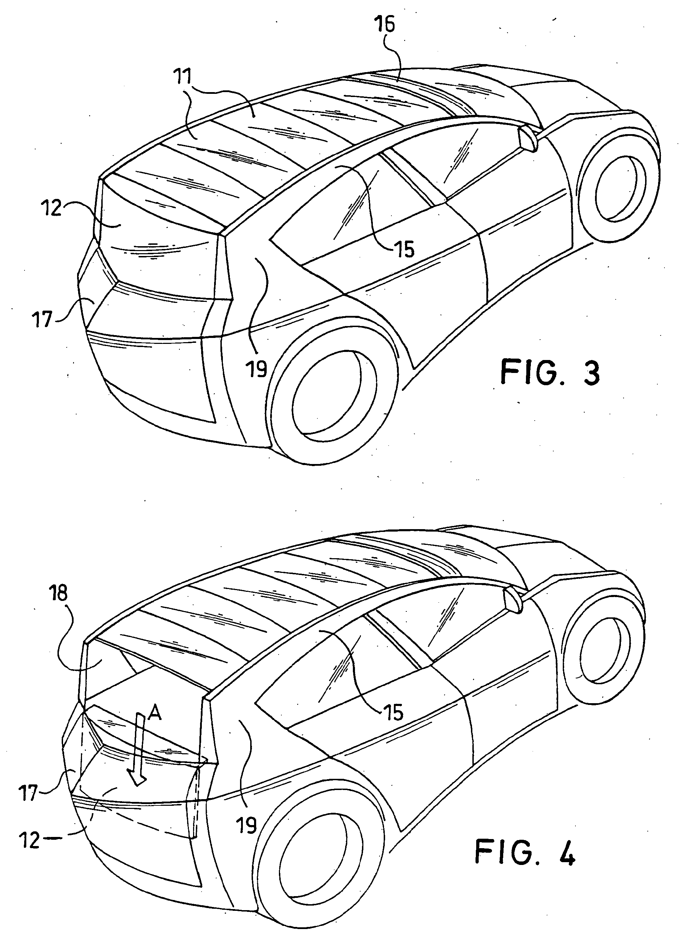

Fig. 1 und 2 zeigen ein erfindungsgemäßes Fahrzeug, dessen Dach 10 sich von einem an die Windschutzscheibe angrenzenden Windabweiser 16 bis hin zu einem hinteren Dachbereich 13 am hinteren Ende der Dachfläche erstreckt. Der linke Seitenholm 14 und der rechte Seitenholm 15 gehen im hinteren Fahrzeugbereich in die linke seitliche Karosseriewand 18 bzw. in die rechte seitliche Karosseriewand 19 über. Den hinteren Abschluss dieses Fahrzeugs bildet eine Heckklappe 17 mit einer Heckscheibe 12, die in die Heckklappe 17 abgesenkt werden kann. Die Verschieberichtung der Heckscheibe 12 ist in Fig. 2 durch einen Pfeil A bezeichnet. Auf diese Weise ist der Zugang zu einem Kofferraum 28 sowohl durch die in die Heckklappe 17 abgesenkte Heckscheibe 12 als auch durch Öffnen der Heckklappe 17 selbst möglich. Die Heckscheibe 12 ist zwar gemäß Darstellung in Fig. 1 vollständig in die Heckklappe 17 abgesenkt, eine vollständige Absenkbarkeit in die Heckklappe 17 ist jedoch nicht zwangsläufig erforderlich.

Die Heckscheibe 17 ist über eine 4-Gelenk-Anordnung 34, von der in Fig. 1 nur der rechte obere Lenker 37 und der rechte untere Lenker 38 gezeigt sind, an den hinteren seitlichen Karosseriewänden 18 bzw. 19 angelenkt. D. h., die Anlenkung erfolgt deutlich unterhalb der Unterkante bzw. des hinteren Rands des Fahrzeugdaches 10.

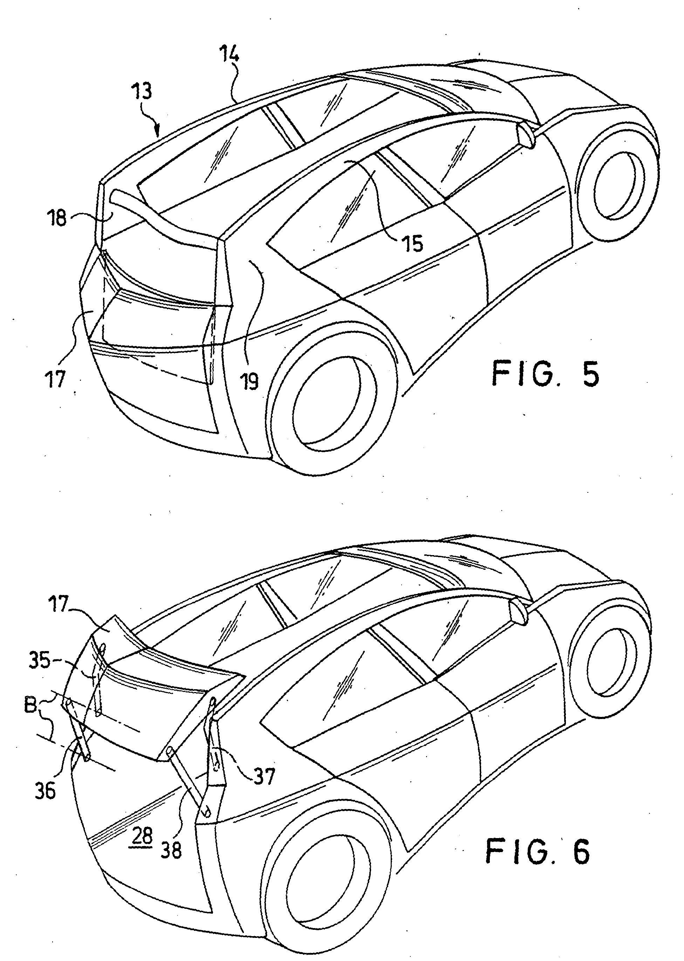

Fig. 3 bis 6 zeigen eine alternative Ausführungsform des erfindungsgemäßen Fahrzeugs, dessen Dach 10 - zumindest in einem hinteren Dachbereich 13 - entfernbar ist. Bei der in den Fig. 3 und 4 gezeigten Ausführungsform besteht das ganze Dach 10 aus Dachlamellen 11, die entweder an das vordere Ende des Daches 10 zum Windabweiser 16 hin oder zum hinteren Dachbereich 13 bzw. zum Fahrzeugheck hin verschoben und dort übereinander gestapelt und abgelegt werden können. Alternativ können die Dachlamellen 11 ganz entfernt (vgl. Fig. 5 und 6) und beispielsweise im Kofferraum 28 abgelegt werden.

In Fig. 6 sind alle vier Lenker 35 bis 38 der 4-Gelenk-Anordnung 34 sowie die schematisch angedeuteten und mit B bezeichneten Drehachsen des linken oberen Lenkers 35 und des linken unteren Lenkers 36 dargestellt.

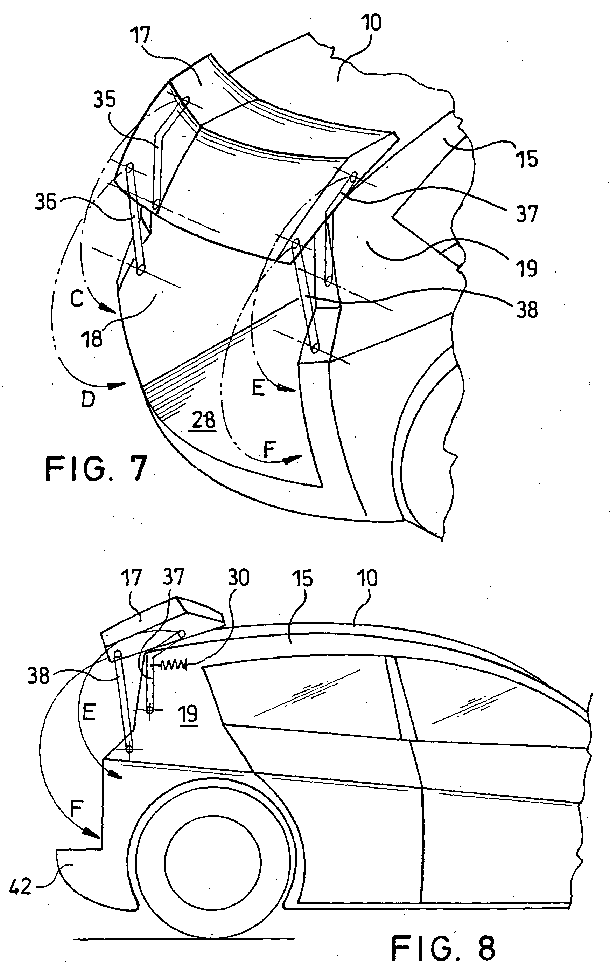

Durch geeignete Wahl der Form der Lenker 35 bis 38 und der Anlenkpunkte der Lenker 35 bis 38 an der Heckklappe 17 und den äußeren Karosseriewänden 18, 19 ist es beispielsweise möglich, die Heckklappe 17 an der Hinterseite des Fahrzeugs entlang in geringem Abstand zu diesem hochzuschwenken, bis sie knapp über dem Dach 10 in ihrer Öffnungsstellung angekommen ist (vgl. Fig. 7 und 8). Die in Fig. 7 mit den Buchstaben C, D, E und F bezeichneten Bewegungsbahnen der Anlenkungspunkte der Lenker 35, 36, 37 bzw. 38 an der Heckklappe 17 verdeutlichen, dass beim Hochschwenken der Heckklappe 17 deren Platzbedarf nach hinten extrem gering ist. Wie aus Fig. 8 ersichtlich ist, überschreitet die Heckklappe 17 beim Öffnen die durch den hinteren Stoßfänger 42 definierte Fahrzeugbegrenzungslinie nicht oder nur unwesentlich. Außerdem benötigt die geöffnete Heckklappe 17 auch nach oben wenig Platz, da sie mittels der 4-Gelenk-Anordnung in eine Position über dem Fahrzeugdach 10 gebracht werden kann, in der sie nur einen sehr geringen Abstand zum Fahrzeugdach 10 aufweist. Dabei liegen die Anlenkpunkte der oberen Lenker 35, 37 mindestens 10 cm, vorzugsweise sogar 15 bis 20 cm, unterhalb der Unterkante des Fahrzeugdaches 10.

Um die Stabilität der Heckklappe 17 in ihrer Öffnungsstellung sicherzustellen, ist eine Verriegelungsvorrichtung 30 vorgesehen, die mindestens einen der Lenker 35 bis 38 in dessen bzw. deren Öffnungsstellung blockiert. In Fig. 8 ist diese Verriegelungsvorrichtung 30 schematisch als Feder dargestellt. Die Verriegelungsvorrichtung 30 kann alternativ auch durch eine Bewegung der Lenker über Totpunkt, mittels einer Magnet-Vorrichtung oder mittels eines einrastenden Sperrriegels ausgebildet sein.

Damit die Heckscheibe 12 in die Heckklappe 17 abgesenkt werden kann, muss die Heckscheibe 12 selbstverständlich eine geringere Breite aufweisen als die Heckklappe 17 Eine besonders ansprechende optische Form ergibt sich dann, wenn die Heckscheibe 12 rahmenlos ist, wie es beispielsweise bei Seitenscheiben von Fahrzeugen bekannt ist.

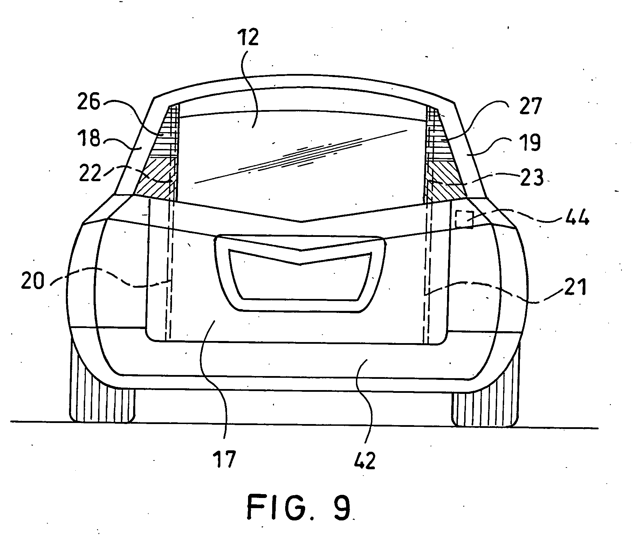

Für eine gute Führung der Heckscheibe 12 sind gemäß Fig. 9 in der Heckklappe 17 eine linke untere Führungsschiene 20 und eine rechte untere Führungsschiene 21 vorgesehen. Um die Führung der Heckscheibe 12 insbesondere in der Nähe ihrer hochgefahrenen Position zu verbessern, sind in den seitlichen Karosseriewänden 18, 19 in deren hinterem Bereich eine linke obere Führungsschiene 22 bzw. eine rechte obere Führungsschiene 23 vorgesehen, die mit den Führungsschienen 20 bzw. 21 fluchten. Das Design der Heckpartie des Fahrzeugs kann interessant gestaltet werden, indem die beiden Rücklichtanordnungen 26, 27 in Höhe der (hochgefahrenen) Heckscheibe 12 vorgesehen werden und die beiden oberen Führungsschienen 22, 23 in diese Rücklichtanordnungen 26 bzw. 27 integriert sind.

Der Bedienkomfort und die Bedienungssicherheit eines erfindungsgemäßen Fahrzeugs können erhöht werden, wenn eine in Fig. 9. nur schematisch dargestellte Absenkvorrichtung 44 vorgesehen ist, welche die Heckscheibe 12 automatisch in die Heckklappe 17 absenkt, wenn die Heckklappe 17 geöffnet wird bzw. geöffnet werden soll. Eine derartige Vorrichtung 44 umfasst üblicherweise einen Motor und zugehörige Antriebskabel (nicht dargestellt) für die Betätigung der Heckscheibe 12 sowie mindestens einen Sensor (ebenfalls nicht dargestellt), der das Öffnen des Schlosses der Heckklappe 17 - oder den Befehl zum Öffnen der Heckklappe 17, falls diese motorisch betätigbar ist - erfasst. Die Absenkvorrichtung 44 stellt sicher, dass die Heckklappe 17 nur dann aufgeschwenkt werden kann, wenn die Heckscheibe 12 bereits in sie abgesenkt ist oder dieser Absenkvorgang bereits eingeleitet worden ist. Dies ist insbesondere dann wichtig, wenn der in der Höhe zur Verfügung stehende Platz sehr begrenzt ist, wie es beispielsweise bei Fertiggaragen häufig der Fall ist.

Bei der vorstehenden Beschreibung der Erfindung wurde beispielhaft die Verwendung eines 4-Gelenks für die Anlenkung der Heckklappe 17 an den seitlichen Karosseriewänden 18, 19 beschrieben. Je nach Anwendung und Einsatzzweck kann jedoch statt des 4-Gelenks auch beispielsweise ein 7-Gelenk oder allgemein ein Mehrgelenk verwendet werden. In diesem Fall kann z. B. die Heckklappe dann mit ihrer Außenseite nach unten in minimalem Abstand zum Fahrzeugdach oberhalb von diesem in ihre Öffnungsstellung gebracht werden.

Vorstehend wurde die Erfindung nur anhand von Personenkraftwagen dargestellt. Selbstverständlich kann die Erfindung auch bei anderen Arten von Kraftfahrzeugen wie insbesondere Wohnmobilen, jedoch auch bei nicht durch einen Motor angetriebenen Fahrzeugen wie beispielsweise Wohnwagen eingesetzt werden.

### Bezugszeichenliste

- 10: Fahrzeugdach
- 11: Dachlamellen
- 12: Heckscheibe
- 13: hinterer Dachbereich
- 14,15: Längsholm
- 16: Windabweiser
- 17: Heckklappe
- 18,19: seitliche Karosseriewände
- 20,21: untere Führungsschiene
- 22,23: obere Führungsschiene
- 26,27: Rücklichtanordnung
- 28: Kofferraum
- 30: Verriegelungsvorrichtung
- 34: Mehrgelenk-Anordnung
- 35-38: Lenker
- 42: Stoßfänger
- 44: Absenkvorrichtung
- A: Verschieberichtung
- B: Drehachse
- C: Bewegungsbahn
- D: Bewegungsbahn
- E: Bewegungsbahn
- F: Bewegungsbahn

## Patentansprüche

1. Fahrzeug mit einer Heckklappe (17), in der eine Heckscheibe (12) höhenverstellbar aufgenommen ist,
**dadurch gekennzeichnet, dass**
die Heckklappe (17) unterhalb des Fahrzeugdaches (10) beabstandet von diesem nach oben verschwenkbar an den seitlichen Karosseriewänden (18, 19) angelenkt ist.

2. Fahrzeug nach Anspruch 1,
**dadurch gekennzeichnet, dass** die Heckklappe (17) mittels einer Mehrgelenk-Anordnung (34), insbesondere einer 4-Gelenk-Anordnung oder einer 7-Gelenk-Anordnung, angelenkt ist.

3. Fahrzeug nach Anspruch 1 oder 2,
**dadurch gekennzeichnet, dass** die Außenseite der Heckklappe (17) beim Verschwenken über das Fahrzeugdach (10) nach oben bzw. hinten/oben weist.

4. Fahrzeug nach einem der vorhergehenden Ansprüche,
**dadurch gekennzeichnet, dass** eine Verriegelungsvorrichtung (30) vorgesehen ist, mit der die Heckklappe (17) in ihrer nach oben verschwenkten Position arretierbar ist.

5. Fahrzeug nach einem der vorhergehenden Ansprüche,
**dadurch gekennzeichnet, dass** die Heckscheibe (12) rahmenlos in der Heckklappe (17) geführt ist.

6. Fahrzeug nach Anspruch 5,
**dadurch gekennzeichnet, dass** in der Heckklappe (17) untere Führungsschienen (20, 21) zur Führung der Heckscheibe (12) vorgesehen sind.

7. Fahrzeug nach Anspruch 6,
**dadurch gekennzeichnet, dass** beim hinteren Ende der seitlichen Karosseriewände (18, 19) mit den unteren Führungsschienen (20, 21) fluchtende obere Führungsschienen (22, 23) zur Führung der Heckscheibe (12) vorgesehen sind.

8. Fahrzeug nach Anspruch 7,
**dadurch gekennzeichnet, dass** jede der oberen Führungsschienen (22, 23) in eine zugeordnete Rücklichtanordnung (26, 27) integriert ist.

9. Fahrzeug nach einem der vorhergehenden Ansprüche,
**dadurch gekennzeichnet, dass** zumindest ein hinterer Dachbereich (13) des Fahrzeugdaches (10) entfernbar ist

10. Fahrzeug nach einem der vorhergehenden Ansprüche,
**dadurch gekennzeichnet, dass** eine Vorrichtung (44) zum automatischen Absenken der Heckscheibe (12) in die Heckklappe (17) beim Öffnen der Heckklappe (17) vorgesehen ist
